# EUROPEAN PATENT SPECIFICATION

(11) **EP 1 016 573 B1**
(45) Date of publication and mention of the grant of the patent: **02.11.2006**
(21) Application number: 99126060.5
(22) Date of filing: 28.12.1999
(51) Int. Cl.: B60T 8/36, F15B 13/00, G01L 19/00

(54) **Drucksensor für ein hydraulisches Steuersystem und Montageverfahren für den Sensor**
Pressure sensor for a hydraulic control system and method for installing the sensor
Capteur de pression pour un système de commande hydraulique et méthode de montage pour le capteur

(30) Priority: 28.12.1998 US 113984 P; 11.01.1999 US 115341 P; 09.04.1999 DE 19916087
(43) Date of publication of application: 05.07.2000
(73) Proprietor: KELSEY-HAYES COMPANY, Livonia, MI 48150 (US)
(72) Inventor: Babala, Michael L., Plymouth, Michigan 48170 (US); Bolitho, Marc, Linden, Michigan 48451 (US); Schliebe, Paul M., Dexter, Michigan 48130 (US); Baron, Thomas, 53518 Leimbach (DE); Gegalski, Helmut, 56218 Mülheim Kärlich (DE)
(74) Representative: Beyer, Andreas

(56) References cited:
- EP-A- 0 570 624
- EP-A- 0 816 142
- WO-A-00/30909
- WO-A-96/33081
- DE-A- 19 545 091
- DE-A- 19 616 658
- US-A- 2 935 292
- US-A- 4 770 207
- US-A- 4 928 530
- US-A- 4 937 553
- US-A- 5 324 101
- US-A- 5 402 824
- US-A- 5 511 864

## Description

### BACKGROUND OF THE INVENTION

This invention relates in general to pressure sensors and in particular to a pressure sensor which is integrated into an electro-hydraulic control unit for an anti-lock brake system.

An anti-lock brake system (ABS) is often included as standard equipment on new vehicles. When actuated, the ABS is operative to control the operation of some or all of the vehicle wheel brakes. A typical ABS, which controls all four vehicle wheels, includes a plurality of normally open and normally closed solenoid valves which are mounted within a control valve body and connected to the vehicle hydraulic brake system. A separate hydraulic source, such as a motor driven pump, is included in the ABS for reapplying hydraulic pressure to the controlled wheel brakes during an ABS braking cycle. The pump is typically included within the control valve body while the pump motor is mounted upon the exterior of the control valve body.

It is also known to provide an ABS for the rear wheels only. Such a system is commonly referred to as a rear wheel anti-lock brake system (RWAL). Typically, RWAL does not include a motor driver pump, but utilizes the vehicle master brake cylinder as a source of pressurized brake fluid. While RWAL has a limited volume of pressurized brake fluid available during an ABS braking cycle, elimination of the pump and pump motor simplifies the system while reducing the cost thereof.

Both four wheel ABS and two wheel RWAL include an electronic control module which has a microprocessor. The control module is electrically coupled to the pump motor, for a four wheel ABS. The control module also is connected to a plurality of solenoid coils associated with the solenoid valves and one or more wheel speed sensors for monitoring the speed and deceleration of the controlled wheels. The control module also is electrically coupled to a pressure sensor which monitors the pressure generated by the vehicle master cylinder. The control module is typically mounted within a removable housing which is attached to the control valve body to form a compact unit which is often referred to as an ABS Electro-hydraulic Control Unit (ECU).

It is known to mount the coils for actuating the solenoid coils within the control module housing. Tubular sleeves which enclose the valve armatures extend from the valve body, forming a seal for the hydraulic brake circuit. When the control module housing is mounted upon the valve body, each of sleeves is received by an associated solenoid coil. Accordingly, the housing can be removed from the valve body for servicing of the control module electronics without opening the hydraulic brake circuit.

During vehicle operation, the microprocessor in the ABS control module continuously receives speed signals from the wheel speed sensors and pressure signals from the pressure sensor. The microprocessor monitors the wheel speed signals and pressure signals for potential wheel lock-up conditions. When the vehicle brakes are applied and the microprocessor senses an impending wheel lock-up condition, the microprocessor is operative to actuate the pump motor, in a four wheel ABS. The microprocessor also is operable to selectively operate the solenoid valves in the valve body to cyclically relieve and reapply hydraulic pressure to the controlled wheel brakes. The hydraulic pressure applied to the controlled wheel brakes is adjusted by the operation of the solenoid valves to limit wheel slippage to a safe level while continuing to produce adequate brake torque to decelerate the vehicle as desired by the driver.

Typically, prior art pressure sensors used in Anti-lock Brake Systems (ABS) are threaded into either a port in the vehicle master cylinder or an external surface of the electro-hydraulic control valve. The external pressure sensor location exposes the sensor to the under-hood operating environment of the vehicle and requires that the sensor be hermetically sealed. Installing a threaded pressure sensor is labor intensive and has a potential for introducing contaminants into the brake fluid. Such pressure sensors also require a dedicated wiring harness which requires an additional manufacturing process step of connecting the harness end to the sensor. Accordingly, it would be desirable to provide an alternate sensor design which eliminates these difficulties.

German patent application DE 195 45 091 A1 discloses a pressure sensor device incorporating an electronic sensor which is designed to be sealed within a protective housing, which also forms a socket for receiving an electrical connection. The housing makes assembly and installation of this device cumbersome.

### SUMMARY OF THE INVENTION

This invention relates to an improved pressure sensor which is integrated into an electro-hydraulic control unit for an anti-lock brake system. The pressure sensor of the present invention has the features recited in claim 1. Preferred features of the invention are recited in the dependent claims.

The present invention contemplates a pressure sensor for a hydraulic control system having a cylindrical base portion which includes a circumferential groove formed therein. The base portion is adapted to be inserted into a bore formed in a hydraulic valve body for the hydraulic control system. A ring of resilient material is disposed within the circumferential groove, the resilient material being adapted to form a seal between the sensor base portion and a wall of the valve body bore. The pressure sensor also includes a pressure sensing device mounted upon the base portion. The base portion can further include a second circumferential groove which carries a spring ring. The spring ring is adapted to cooperate with a complementary groove formed in the valve body bore to retain the sensor in the valve body bore.

Alternately, the second circumferential groove can have a second ring of resilient material disposed therein which is also adapted to form a seal between the pressure sensor base portion and the valve body bore. When the sensor includes two sealing rings, a pressure sensing port is formed in the base portion and the sensed pressure is applied between the rings of resilient material, so that the axial pressures exerted upon the sensor are balanced. The pressure sensor can further include a third circumferential groove formed in the base portion which has a spring ring disposed therein. The spring ring is adapted to cooperate with a complementary groove formed in the valve body bore to retain the sensor in the valve body bore.

It is further contemplated that the pressure sensor includes an axial electrical connector mounted upon the base portion. The connector can include a plurality of electrical connectors. The sensor also includes axial bore formed in the base portion. The axial bore terminates in a diaphragm which carries the pressure sensing device and the bore is adapted to receive pressurized hydraulic fluid. The sensor can further include a cylindrical insert disposed within the axial bore formed in the sensor base portion.

In the preferred embodiment, the pressure sensor is mounted in a hydraulic control system valve body adjacent to a plurality of solenoid valves and enclosed by a removable housing which also carries solenoid coils for the solenoid valves. Also, the electrical connector is a male connector and the housing carries a female connector which cooperates with the male connector to form an electrical connection for the pressure sensing device. The sensor base portion can be formed having a stepped exterior shape with the valve body bore also being stepped. The bore step cooperates with the sensor base portion step to limit the insertion distance of the sensor into the valve body bore.

It is also contemplated that the pressure sensor includes a signal conditioning circuit carried by the sensor base portion. The signal conditioning circuit performs diagnostic tests upon the pressure sensing device and, upon detecting a non-operable pressure sensor, generates an error signal. The diagnostic test can be performed upon initial power up of the sensor and/or during operation of the sensor. In the preferred embodiment, the signal conditioning circuit is connected to a microprocessor included in an anti-lock brake system, the signal conditioning circuit being responsive to a signal from the microprocessor to transmit pressure data to the microprocessor. The sensor also can include a temperature sensor with the signal conditioning circuit being operable to transmit temperature data to the microprocessor.

In addition to being used in an anti-lock brake system, it is contemplated that the pressure sensor also can be used in a traction control system or in a vehicle stability system.

The invention also contemplates a method for installing a sensor into a hydraulic valve body. The method includes providing a pressure sensor having a cylindrical base portion which carries a spring ring in a first circumferential groove formed therein and a ring of resilient material carried in a second circumferential groove formed therein. The pressure sensor is partially inserted into a bore in a valve block for a hydraulic control system until the ring of resilient material forms a seal with the wall of the valve block bore. The pressure sensor is connected to pressure monitoring equipment and the valve block bore is pressurized. The the monitoring equipment is observed to confirm operation of the pressure sensor. Finally, the pressure sensor is inserted fully into the valve block bore upon obtaining readings to indicate satisfactory operation of the pressure sensor with the spring ring engaging a circumferential groove formed in the wall of the valve body bore and cooperating therewith to retain the sensor within the valve body bore.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 illustrates a pressure sensor in accordance with the invention.
Fig. 2 is a plan view of the pressure sensor shown in Fig. 1
Fig. 3 is a sectional view of the pressure sensor shown in Fig. 1 taken along line 3-3 in Fig. 2
Fig. 4 illustrates the pressure sensor shown in Fig. 1 mounted in a hydraulic control unit.
Fig. 5 illustrates the pressure sensor shown in Fig. 1 in a test position prior to being seated in a hydraulic control unit.
Fig. 6 is a partial sectional view of an alternate embodiment of the pressure sensor shown in Fig. 1.
Fig. 7 illustrates another alternate embodiment of the pressure sensor shown in Fig. 1.
Fig. 8 illustrates another alternate embodiment of the pressure sensor shown in Fig. 1 mounted in a hydraulic control unit.
Fig. 9 illustrates an alternate embodiment of the pressure sensor shown in Fig. 8.

### DETAILED DESCRIPTION OF THE PREFERRED EMBODIMENT

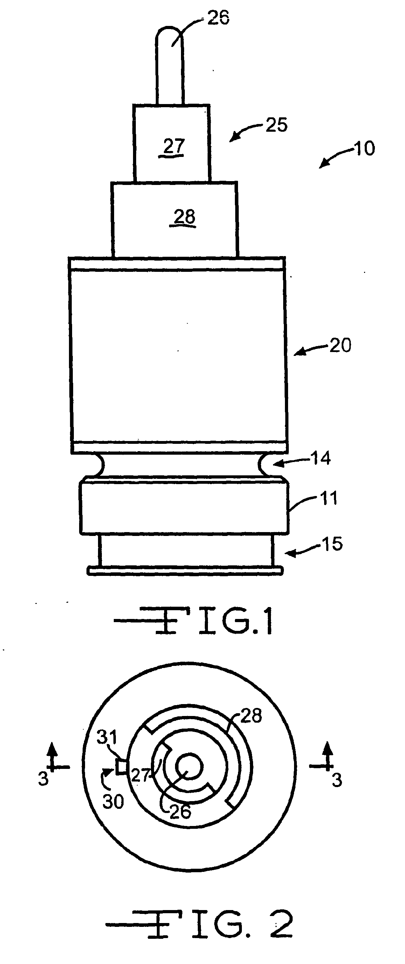

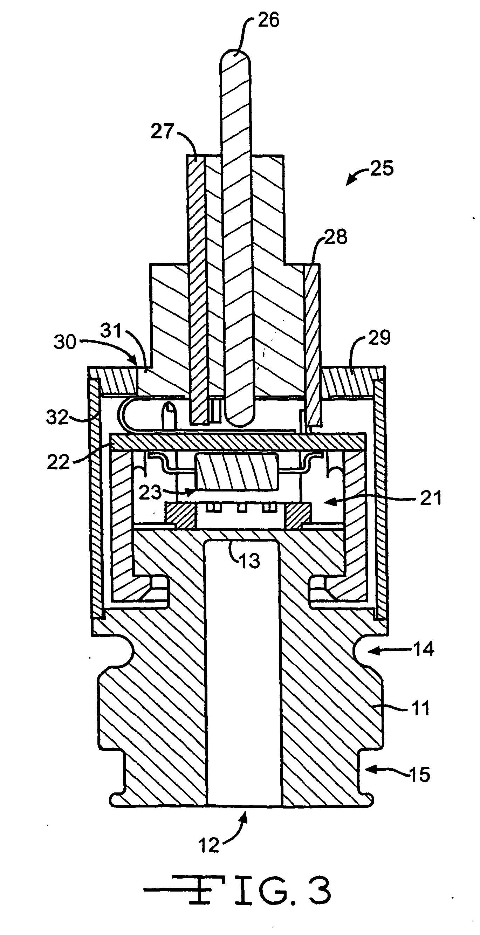

Referring now to the drawings, there is illustrated in Fig. 1 an pressure sensor 10 in accordance with the invention. The sensor 10 includes a generally cylindrical base 11 having a central axial bore 12 formed therein. As best seen in Fig. 3, the upper end of the bore 12 terminates in a diaphragm 13. The base 11 also has upper and lower circumferential grooves 14 and 15, respectively, formed therein. In the preferred embodiment, the base of the upper groove 14 has a semi-circular cross section.

The base 11 carries a central sensor portion 20 which, in the preferred embodiment, includes a strain gage type pressure sensing device 21 which uses resistive technology arranged in a full or half bridge configuration. The pressure sensing device 21 is mounted upon the upper surface of the diaphragm 13. As will be explained below, the bore 13 receives pressurized brake fluid which presses against the lower surface of the diaphragm 13. When the pressure within the bore 12 changes, strains are developed in the diaphragm 13 which are detected by the pressure sensing device 21 and converted thereby into an electrical pressure signal. The central portion 20 of the sensor 10 also includes a printed circuit board 22 which carries an electronic circuit 23 for conditioning the pressure signals generated by the pressure sensing device 21. While the preferred embodiment has been described and illustrated as having a resistive strain gage type of pressure sensing device 21, it will be appreciated that the invention also can be practiced with other types of pressure sensing devices, such as, for example, a capacitive type of pressure sensor (not shown).

The pressure sensor 10 further includes a male axial connector 25 which extends from the top of the central sensor portion 20. As best seen in Fig. 3, the connector 25 includes an axially extending central electrode 26 and first and second circular electrodes 27 and 28, respectively, which are concentric with the central electrode 26. The electrodes 26, 27 and 28 are separated by insulative material and extend through a sensor cap 29. The lower ends of the electrodes 26, 17 and 28 are connected to the electrical components 23 of the pressure sensing device 21. In the preferred embodiment, the central electrode 26 is connected to a five volt source which supplies power to the pressure sensing device 21 and the signal conditioning circuit 23. The first circular electrode 27 carries the pressure sensor output signal while the second circular electrode 28 is a ground connection.

Also in the preferred embodiment, a keyway 30 is formed in the cap 29 which receives a complementary key 31 formed upon an outer surface of the male connector 25, as shown in Figs. 2 and 3. The key 31 cooperates with the keyway 30 to prevent rotation of the male connector 25 relative to the cap 29. Alternately, the invention can be practiced without the keyway 30 and key 31. The connector 25 and sensor cap 29 are supported upon the sensor base 11 by a cylindrical sleeve 32.

While three electrodes 26, 27 and 28 are shown in Figs. 2 and 3, it will be appreciated that the invention also can be practiced with more or less electrodes. The male connector 25 is received by a complementary female connector (not shown) to electrically couple the sensor 10 to the ABS electronic control module. The axial symmetry of the connector 25 eliminates the need to orient the connector components relative to one another and thereby simplifies the manufacturing process.

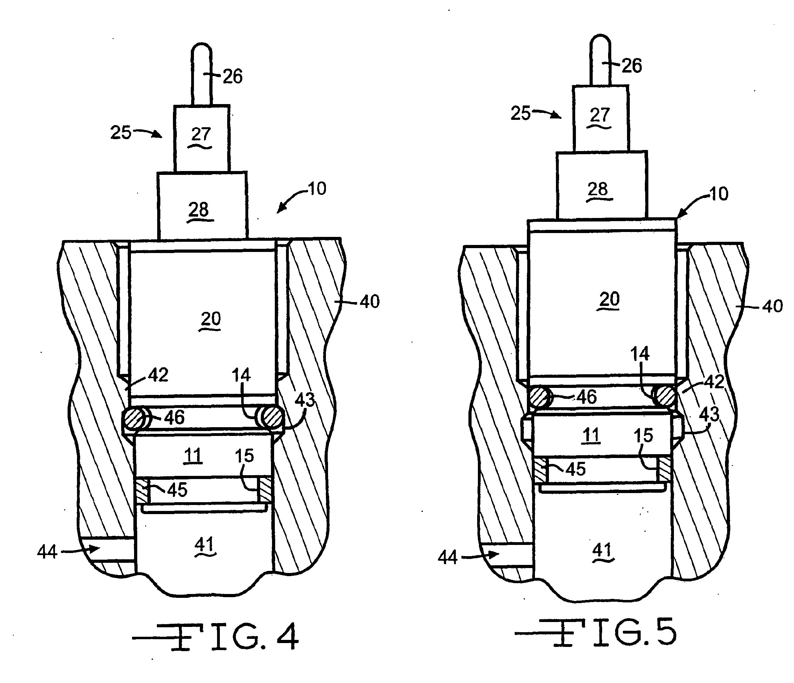

The invention further contemplates that the sensor 10 is permanently mounted upon a hydraulic control valve body 40, as illustrated in Fig. 4. The sensor 10 is received by a pressure sensor bore 41 formed in the valve body 40. The upper portion of the pressure sensor bore 41 includes a reduced diameter portion 42 having chamfered edges. The purpose for the reduced diameter portion 42 will be described below. The lower edge of the reduced diameter portion 42 defines a circumferential retaining groove 43. An internal passageway 44 formed in the valve body 40 provides communication between the valve body bore 41 and the master cylinder supply portion of the valve body 40 (not shown).

An O-ring 45 formed from a resilient material is disposed in the lower groove 15 formed in the base 11 of the sensor 10. The O-ring 45 is compressed between the wall of the valve body bore 41 and the lower sensor groove 14 to form a seal therebetween.

A circular spring ring 46 carried by the upper groove 14 formed in the base 11 of the sensor 10 retains the sensor 10 in the valve body bore 41. As shown in Fig. 4, the spring ring 46 extends into the circumferential retaining groove 43 formed in the wall of the pressure sensor bore 41. Upon initial insertion of the pressure sensor 10 into the pressure sensor bore 41, the chamfered edge of the reduced diameter portion 42 of the bore 41 cooperates with the spring ring 46 to compress the ring 46. Upon further insertion of the sensor 10, the ring 46 expands in a radial direction into the retaining groove 43 to retain the sensor 10 within the bore 41.

In the preferred embodiment, the pressure sensor 10 is a non-serviceable part which is permanently fixed in the valve body 40. When installed, the sensor 10 is flush with the surface of the valve body 40 with only the electrical connector 25 extending above the valve body surface. Also in the preferred embodiment, the sensor is co-located with the solenoid valves. Accordingly, the complementary female connector is carried by the ABS electronic control module (not shown). As described above, the ABS electronic control module is mounted in a removable housing. Accordingly, an electrical connection with the sensor 10 is made when the control module housing is installed upon the valve body 40. This eliminates the separate wiring harness required by prior art pressure sensors. Furthermore, the control module housing provides a hermetic seal for the pressure sensor 10, eliminating any need for a separate seal therefor.

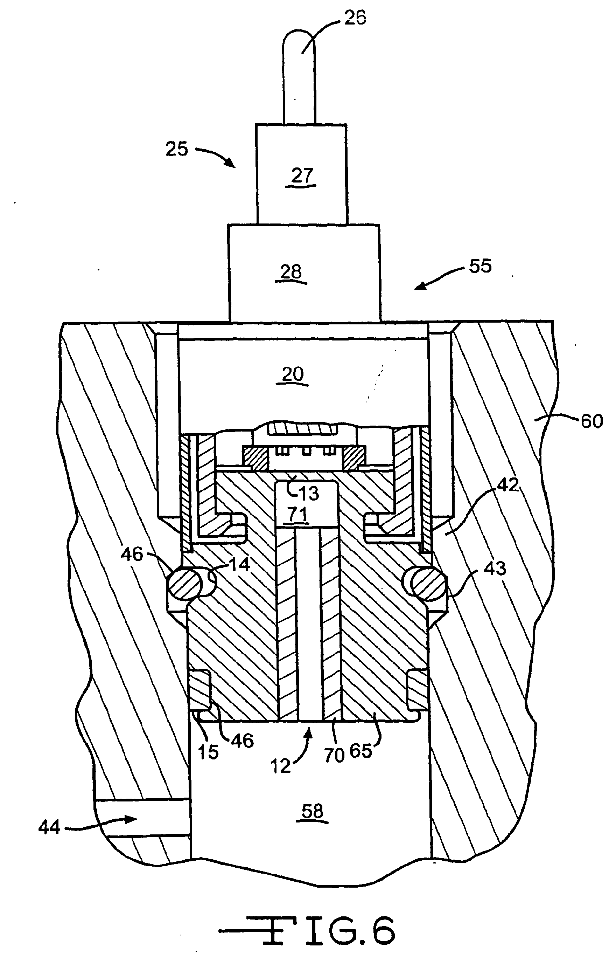

The invention further contemplates a test position for the sensor 10, which is illustrated in Fig. 5. Components shown in Fig. 5 which are similar to components shown in Fig. 4 have the same numerical designators. As shown in Fig. 5, the sensor 10 is partially inserted into the valve body bore 41. The O-ring 45 is compressed by the wall of the bore 41 to form a seal between the sensor 10 and the bore wall. Additionally, as described above, the spring ring 46 is compressed into the semi-circular base of the upper groove 14 by the reduced diameter portion 42 of the bore 41 above the sensor retaining groove 43. The electrical connector 25 to connected to a test apparatus (not shown). This allows pressurization of the bore 41 and testing of the sensor 10 to confirm proper operation of the sensor 10. Upon successful completion of the test, the sensor 10 is pressed further into the bore 41 until the spring ring 46 seats in the retaining groove 43. Should the sensor 10 not pass the test, it may be withdrawn form the bore 41 since the spring ring 46 has not expanded into the retaining groove 43.

A partial sectional view of an alternate embodiment of the pressure sensor is shown generally at 55 in Fig. 6. Components shown in Fig. 6 which are similar to components shown in Figs. 3 and 4 have the same numerical designators. The pressure sensor 55 is carried in a stepped pressure sensor bore 58 formed in a valve body 60. Accordingly, the sensor 55 includes a stepped base 65. The stepped base 65 cooperates with the stepped bore 58 to axially position the sensor 55 within the bore. Also, a cylindrical insert 70 having an axial bore formed therethrough is disposed within the axial bore 12 formed in the sensor base 65. In the preferred embodiment, the insert 70 is formed from either steel or an elastomer; however, the insert 70 also can be formed from other materials. The length of the insert 70 is less than the depth of the bore 12. The insert 70 cooperates with the bore 12 to define a chamber 71 which is adjacent to the sensor diaphragm 13. The chamber 71 has the same diameter as the bore 12. Accordingly, the stepped bore 58 and insert 70 reduce the volume of the brake fluid supplied to the sensor 65 without diminishing the size of the sensor diaphragm 13.

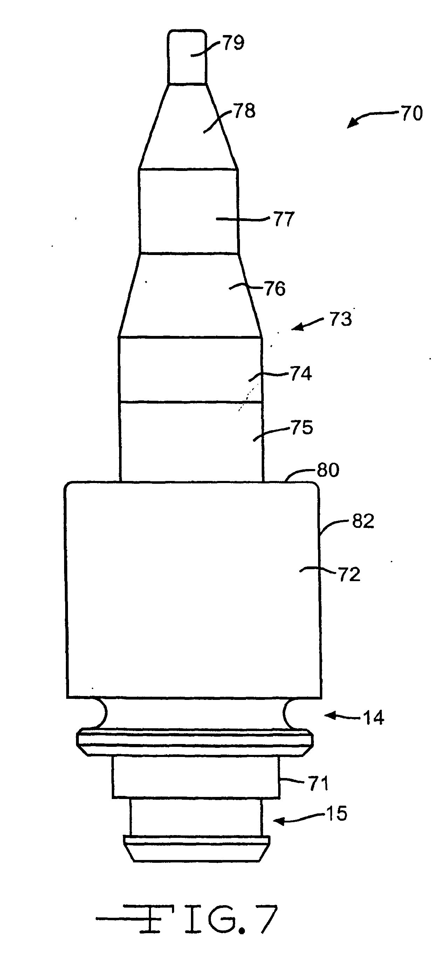

Fig. 7 illustrates another embodiment 70 of the pressure sensor. The pressure sensor 70 includes a stepped base 71 which is similar to the pressure sensor 55 shown in Fig. 6. Components shown in Fig. 7 which are similar to components shown in Fig. 6 have the same numerical identifiers. The base 71 includes an upper circumferential groove 14 which receives a retaining spring ring (not shown) and a lower circumferential groove 15 which receives an O-ring (not shown). Mounted upon the base 72 is the sensor portion 72. Extending axially from the top of the sensor portion is a male connector 73. The connector includes ground ring 74 formed from an electrically conductive material. The ground ring 74 is mounted upon a cylinder support 75 formed from an insulative material. The ground ring 74 is connected internally to the signal conditioning circuit (not shown) contained within the sensor portion 72 of the sensor 70. A first tapered portion 76 of insulated material extends axially from the ground ring to a second ring 77 formed from an electrically conductive material. The second ring 77 is connected internally to the signal conditioning circuit and thus provides an output signal connection. A second tapered portion 78 extends axially from the second ring 77 to a cylindrical tip 79 formed from electrically conducting material. The tip 79 extends through the connector 73 and provides a connection between a power supply and the signal conditioning circuit.

In the preferred embodiment, a ground flange 80 is mounted upon the upper surface of the sensor portion 72. The sensor portion 72 includes a cylindrical metal housing 82 which has an upper end crimped onto the ground flange 80. The ground flange 80 is capacitively coupled (not shown) to the ground ring 74 to provide a ground for the sensor housing 82, while the coupling capacitor blocks noise from the signal conditioning circuit ground. Because the rings 74 and 77 extend completely around the connector 73, the orientation of the sensor 70 in the valve block is not important. The connector 73 is received by a corresponding female connector (not shown) having three electrical connectors. The female connector is mounted upon the electronic control module. The tapered portions 76 and 78 help guide the female connector over the male connector 73 when the electronic control module housing is assembled onto the valve body.

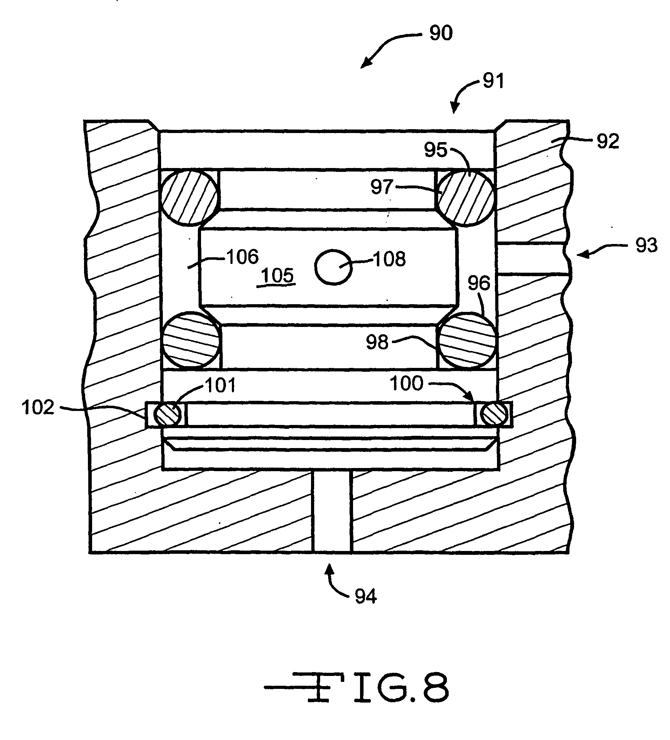

Fig. 8 illustrates another embodiment 90 of the pressure sensor. The sensor 90 is shown disposed in a bore 91 formed in a hydraulic valve body 92. A cross bore 93 provides communication between the bore 92 and the vehicle master cylinder (not shown). An axial bore 94 provides a vent for the lower end of the bore 91. The pressure sensor includes first and second O-rings, 95 and 96, respectfully, which are disposed in first and second circumferential grooves 97 and 98. A third circumferential groove 100 is formed in the lower end of the sensor 90. A retaining spring ring 101 is disposed in the third groove 100 and cooperates with a corresponding groove 102 formed in the wall of the bore 91 to retain the pressure sensor 90 within the bore 91. The sensor 90 also includes a reduced diameter center portion 105 which cooperates with the bore 91 to define a pressure chamber 106. The pressure chamber 106 receives brake fluid from the cross bore 93. The brake pressure exerts equal axial pressures upon the O-rings 95 and 96. Thus, the axial forces upon the sensor 90 are balanced. A port 108 formed in the center portion 105 of the pressure sensor receives pressurized brake fluid and communicates with a pressure sensing device (not shown) which is contained within the pressure sensor 90.

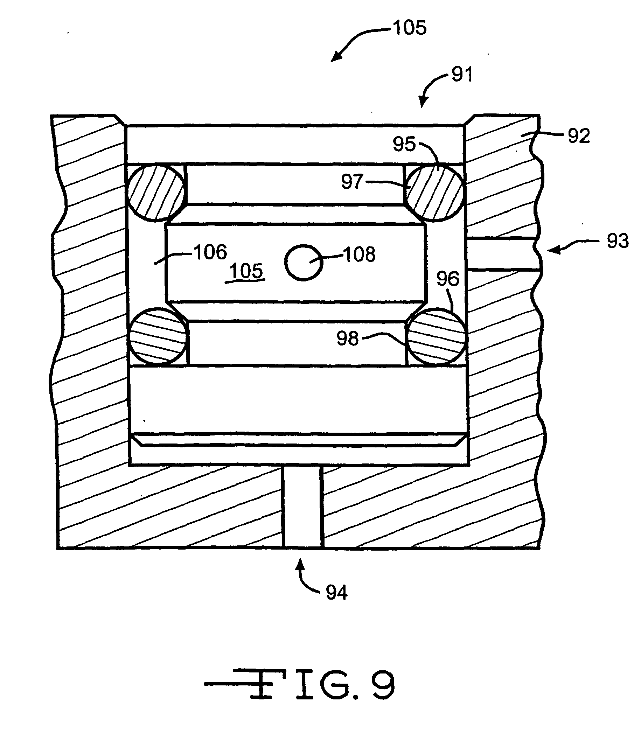

An alternate embodiment 105 of the pressure sensor 90 shown in Fig. 8 is illustrated in Fig. 9. Components shown in Fig. 9 which are similar to components in Fig. 8 have the same numerical designators. As described above, the axial forces exerted upon the sensor 105 are balanced. Therefore, the pressure sensor 105 does not include a spring retaining ring and the corresponding grooves to retain the sensor 105 within the bore 91 are not needed. Accordingly, the sensor 105 has a simpler structure and is less costly to manufacture that the sensor 90 described above.

The invention further contemplates that the signal conditioning circuit 23 can include an Application Specific Integrated Circuit (ASIC) which would provide a serial number output. In such a case, it is contemplated that the electrical connector would include a bi-directional output pin. Accordingly, the serial output would be requested by the electronic control unit microprocessor. The electronic control unit microprocessor also could provide continuous monitoring of the sensor for faults such as bridge stray resistance, bridge open circuited, bridge short circuited, and/or ASIC failure. Upon power up, the ASIC could also perform a self test to assure that the pressure sensor is operational. Should the sensor be non-operational, the ASIC would generate an error signal which would be transmitted to the microprocessor in the electronic control module. The microprocessor would be responsive to the error signal to disable the ABS and provide a warning signal to the vehicle operator, such as illuminating a warning light.

It also is contemplated that a temperature sensing device could be included in the sensor. The temperature sensing device would provide brake fluid temperature data to the microprocessor. The ASCI could provide both pressure and temperature data in a signal data output signal. For example, the ASCI could provide a pulse width modulated output signal with frequency corresponding to the temperature data and the duty cycle corresponding to the pressure data. Alternately, the ASCI could provide a pulse width modulated output signal with duty cycle corresponding to the temperature data and the frequency corresponding to the pressure data.

While the preferred embodiment of the invention has been illustrated and described for a pressure sensor utilized in an ABS, it will be appreciated the invention also can be practiced with other control systems. For example, it is contemplated that the invention also can be included in intelligent or integrated chassis control systems, such as Traction Control, Stability Control, Adaptive Cruise Control or Collision Avoidance Systems.

In accordance with the provisions of the patent statutes, the principle and mode of operation of this invention have been explained and illustrated in its preferred embodiment. However, it must be understood that this invention may be practiced otherwise than as specifically explained and illustrated without departing from its scope as defined in the claims. For example, while the preferred embodiment of the invention has been described and illustrated as including a male electrical connector, it will be appreciated that the invention also can be practiced with a female connector.

## Claims

1. A pressure sensor (10; 55; 70; 90) for a hydraulic control system comprising:
a cylindrical base portion (11; 71; 105) having a circumferential groove (15; 97, 98) formed therein, said base portion (11; 71; 105) adapted to be inserted into a bore (41; 58; 91) formed in a hydraulic valve body (40; 60; 92) for the hydraulic control system;
a ring of resilient material (45; 95, 96) disposed within said circumferential groove (15; 97, 98), said resilient material adapted to form a seal between said base portion (11; 71; 105) and a wall of said bore (41; 58; 91) formed in said hydraulic valve body; and
a pressure sensing device (21; 72) mounted upon said base portion (11; 71; 105); and
an axial electrical connector (25; 73) mounted upon said base portion (11; 71; 105),
**characterized in that** said electrical connector (25; 73) includes a plurality of concentric electrical connectors (26, 27, 28; 74, 77, 79) having arcuate shapes and different axial lengths.

2. A sensor according to claim 1 wherein said circumferential groove (15; 97, 98) is a first groove and said base portion (11; 71; 105) has a second circumferential groove (14; 100) formed therein, said second circumferential groove (14; 100) having a spring ring (46; 101) disposed therein, said spring ring (46; 101) adapted to cooperate with a complementary groove (43; 102) formed in said hydraulic valve body bore (41; 58; 91) to retain the sensor in said valve body bore.

3. A sensor according to claim 1 wherein said base portion (11; 71; 105) has an axial bore (12) formed therein which terminates in a diaphragm (13), said diaphragm (13) carrying said pressure sensing device (21; 72) and said axial bore (12) being adapted to receive pressurized hydraulic fluid.

4. A sensor according to claim 3 wherein the sensor (10; 55; 70; 90) is mounted in a hydraulic control system valve body (40; 60; 92) adjacent to a plurality of solenoid valves and further wherein the sensor is enclosed by a removable housing, said housing forming a hermetic seal with said valve body (40; 60; 92), said housing also carrying solenoid coils for the solenoid valves.

5. A sensor according to claim 4 wherein said electrical connector (25; 73) is a male connector and said housing carries a female connector which cooperates with said male connector to form an electrical connection for said pressure sensing device.

6. A sensor according to claim 3 further including a cylindrical insert (70) disposed within said axial bore (12) formed in said sensor base portion (11; 71; 105), said insert (70) having an axial bore formed therethrough.

7. A sensor according to claim 6 wherein said base portion (11; 71; 105) has a stepped exterior shape and further wherein said valve body bore (12) also is stepped with said valve body bore step cooperating with said base portion (11; 71; 105) step to limit the insertion distance of the sensor into said valve body bore.

8. A sensor according to claim 3 further including a signal conditioning circuit (23) carried by said sensor base portion (11; 71; 105).

9. A sensor according to claim 8 wherein said signal conditioning circuit (23) performs diagnostic tests upon said pressure sensing device (21; 72) and, upon detecting a non-operable pressure sensor, generates an error signal.

10. A sensor according to claim 9 wherein said diagnostic test is performed upon initial power up of the sensor.

11. A sensor according to claim 9 wherein said signal conditioning circuit (23) is connected to a microprocessor included in an anti-lock brake system, said signal conditioning circuit (23) being responsive to a signal from said microprocessor to transmit pressure data to said microprocessor.

12. A sensor according to claim 11 further including a temperature sensor, said signal conditioning circuit being operable to transmit temperature data to said microprocessor.

13. A sensor according to claim 12 wherein said data is transmitted with a pulse modulated wave with a frequency being a function of the temperature data and a duty cycle being a function of the pressure data.

14. A sensor according to claim 12 wherein said data is transmitted with a pulse modulated wave with a frequency being a function of the pressure data and a duty cycle being a function of the temperature data.

15. A sensor according to claim 1 wherein said sensor base portion (11; 71; 105) has a second circumferential groove (14; 100) formed therein, said second circumferential groove (14; 100) having a second ring (95, 96) of resilient material disposed therein, said resilient material also adapted to form a seal between said base portion (11; 71; 105) and said valve.body bore (41; 58; 91), and further wherein said valve body (100) has a fluid supply passageway (93) formed therein which communicates with said valve body bore (91) between said first and second resilient rings (95, 96), said fluid supply passageway (93) adapted to supply pressurized hydraulic fluid to said valve body bore (91) whereby the axial pressures exerted upon the sensor are balanced.

16. A sensor according to claim 15 wherein said sensor base portion (11; 71; 105) further includes a pressure sensing port formed therein between said rings of resilient material.

17. A sensor according to claim 16 further including a third circumferential groove (100) formed in said sensor base portion (105), said third circumferential groove (100) having a spring ring (101) disposed therein, said spring ring adapted to cooperate with a complementary groove (102) formed in the hydraulic valve body bore (91) to retain the sensor in said valve body bore.

18. A pressure sensor according to claim 3 wherein the pressure sensor is included in traction control system.

19. A pressure sensor according to claim 3 wherein the pressure sensor is included in a vehicle stability system.

20. A method for installing the pressure sensor of claim 1 into a hydraulic valve body comprising the steps of:
(a) providing a pressure sensor (10; 55; 70; 90) having a cylindrical base portion (11; 71; 105) which carries a spring ring (46; 101) in a first circumferential groove (14; 100) formed therein and a ring of resilient material (45; 95, 96) carried in a second circumferential groove (15; 97, 98) formed therein;
(b) inserting the pressure sensor (10; 55; 70; 90) partially into a bore (41; 58; 91) in a valve body (40; 60; 92) for a hydraulic control system until the ring of resilient material (45; 95; 96) forms a seal with the wall of the valve body bore (41; 58; 91);
(c) connecting the pressure sensor (10; 55; 70; 90) to pressure monitoring equipment;
(d) pressurizing the valve body bore (41; 58; 91);
(e) observing the monitoring equipment to confirm operation of the pressure sensor; and
(f) inserting the pressure sensor (10; 55; 70; 90) fully into the valve body bore upon obtaining readings to indicate satisfactory operation of the pressure sensor, the spring ring (46; 101) engaging a circumferential groove (43; 102) formed in the wall of the valve body bore and cooperating therewith to retain the sensor within the valve body bore.

21. A method according to claim 20 further including the steps of:
(g) removing the monitoring equipment; and
(h) attaching a housing to the valve body, the housing enclosing the pressure sensor and forming a hermetic seal with the valve body.

## Patentansprüche

1. Drucksensor (10; 55; 70; 90) für ein hydraulisches Steuersystem mit:
einem zylindrischen Basisabschnitt (11; 71; 105), der eine darin ausgebildete Umfangsnut (15; 97, 98) aufweist, wobei der Basisabschnitt (11; 71; 105) dafür ausgelegt ist, in eine Bohrung (41; 58; 91) eingeführt zu werden, die in einem Hydraulikventilkörper (40; 60; 92) für das hydraulische Steuersystem ausgebildet ist,
einem Ring aus elastischem Material (45; 95, 96), der in der Umfangsnut (15; 97, 98) angeordnet ist, wobei das elastische Material dafür ausgelegt ist, zwischen dem Basisabschnitt (11; 71; 105) und einer Wand der im Hydraulikventilkörper ausgebildeten Bohrung (41; 58; 91) eine Abdichtung zu bilden,
einer Druckerfassungseinrichtung (21; 72), die auf dem Basisabschnitt (11; 71; 105) montiert ist, und
einem axialen elektrischen Verbinder (25; 73), der auf dem Basisabschnitt (11; 71; 105) montiert ist,
**dadurch gekennzeichnet, dass** der elektrische Verbinder (25; 73) mehrere konzentrische elektrische Verbindungsglieder (26, 27, 28; 74, 77, 79) umfasst, die jeweils eine bogenförmige Gestalt und eine unterschiedliche axiale Länge haben.

2. Sensor nach Anspruch 1,
bei dem die Umfangsnut (15; 97, 98) eine erste Nut ist und der Basisabschnitt (11; 71; 105) eine zweite darin ausgebildete Umfangsnut (14; 100) umfasst, wobei die zweite Umfangsnut (14; 100) einen darin angeordneten Federring (46; 101) aufweist und der Federring (46; 101) dafür ausgelegt ist, mit einer in der Hydraulikventilkörperbohrung (41; 58; 91) ausgebildeten Komplementärnut (43; 102) zusammenzuwirken, um den Sensor in der Ventilkörperbohrung zu halten.

3. Sensor nach Anspruch 1,
bei dem der Basisabschnitt (11; 71; 105) eine darin ausgebildete Axialbohrung (12) aufweist, die in einer Membran (13) endet, wobei die Membran (13) die Druckerfassungseinrichtung (21; 72) trägt und die Axialbohrung (12) dafür ausgelegt ist, eine unter Druck stehende Hydraulikflüssigkeit aufzunehmen.

4. Sensor nach Anspruch 3,
wobei der Sensor (10; 55; 70; 90) in einem Ventilkörper (40; 60; 92) eines hydraulischen Steuersystems benachbart zu mehreren Elektromagnetventilen montiert ist und der Sensor ferner von einem abnehmbaren Gehäuse umschlossen ist, wobei das Gehäuse eine hermetische Abdichtung mit dem Ventilkörper (40; 60; 92) bildet und das Gehäuse außerdem die Elektromagnetspulen für die Elektromagnetventile trägt.

5. Sensor nach Anspruch 4,
bei dem der elektrische Verbinder (25; 73) ein Stecker ist und das Gehäuse eine Buchse trägt, die mit dem Stecker zusammenwirkt, um eine elektrische Verbindung für die Druckerfassungseinrichtung zu bilden.

6. Sensor nach Anspruch 3,
der ferner einen zylindrischen Einsatz (70) umfasst, der in der im Sensor-Basisabschnitt (11; 71; 105) ausgebildeten Axialbohrung (12) angeordnet ist, wobei in dem Einsatz (70) eine Axialbohrung ausgebildet ist.

7. Sensor nach Anspruch 6,
bei dem der Basisabschnitt (11; 71; 105) eine gestufte äußere Gestalt hat und bei dem des Weiteren auch die Ventilkörperbohrung (12) gestuft ist, wobei die Ventilkörperbohrungsstufe mit der Stufe des Basisabschnitts (11; 71; 105) zusammenwirkt, um die Einführungsstrecke des Sensors in die Ventilkörperbohrung zu begrenzen.

8. Sensor nach Anspruch 3,
der ferner eine Signalaufbereitungsschaltung (23) umfasst, die vom Sensor-Basisabschnitt (11; 71; 105) getragen wird.

9. Sensor nach Anspruch 8,
bei dem die Signalaufbereitungsschaltung (23) an der Druckerfassungseinrichtung (21; 72) Diagnoseprüfungen durchführt und bei Erfassung eines nicht betriebsfähigen Drucksensors ein Fehlersignal erzeugt.

10. Sensor nach Anspruch 9,
bei dem die Diagnoseprüfung beim erstmaligen Einschalten des Sensors durchgeführt wird.

11. Sensor nach Anspruch 9,
bei dem die Signalaufbereitungsschaltung (23) mit einem Mikroprozessor verbunden ist, der in einem Antiblockiersystem enthalten ist, wobei die Signalaufbereitungsschaltung (23) auf ein Signal vom Mikroprozessor anspricht, um Druckdaten an den Mikroprozessor zu senden.

12. Sensor nach Anspruch 11,
der ferner einen Temperatursensor umfasst, wobei die Signalaufbereitungsschaltung Temperaturdaten an den Mikroprozessor zu senden vermag.

13. Sensor nach Anspruch 12,
bei dem die Daten mit einer impulsmodulierten Welle mit einer Frequenz, die eine Funktion der Temperaturdaten ist, und einem Tastverhältnis gesendet werden, das eine Funktion der Druckdaten ist.

14. Sensor nach Anspruch 12,
bei dem die Daten mit einer impulsmodulierten Welle mit einer Frequenz, die eine Funktion der Druckdaten ist, und einem Tastverhältnis gesendet werden, das eine Funktion der Temperaturdaten ist.

15. Sensor nach Anspruch 1,
bei dem der Sensor-Basisabschnitt (11; 71; 105) eine zweite darin ausgebildete Umfangsnut (14; 100) umfasst, wobei die zweite Umfangsnut (14; 100) einen darin angeordneten zweiten Ring (95, 96) aus elastischem Material aufweist und das elastische Material auch dafür ausgelegt ist, zwischen dem Basisabschnitt (11; 71; 105) und der Ventilkörperbohrung (41; 58; 91) eine Abdichtung zu bilden, und wobei der Ventilkörper (100) ferner einen darin ausgebildeten Flüssigkeitszufuhrkanal (93) umfasst, der mit der Ventilkörperbohrung (91) zwischen dem ersten und dem zweiten elastischen Ring (95, 96) in Verbindung steht, wobei der Flüssigkeitszufuhrkanal (93) dafür ausgelegt ist, der Ventilkörperbohrung (91) unter Druck stehende Hydraulikflüssigkeit zuzuführen, wodurch die auf den Sensor ausgeübten axialen Drücke ausgeglichen werden.

16. Sensor nach Anspruch 15,
bei dem der Sensor-Basisabschnitt (11; 71; 105) ferner eine Druckerfassungsmündung umfasst, die in ihm zwischen den Ringen aus elastischem Material ausgebildet ist.

17. Sensor nach Anspruch 16,
der ferner eine im Sensor-Basisabschnitt (105) ausgebildete dritte Umfangsnut (100) umfasst, wobei die Umfangsnut (100) einen darin angeordneten Federring (101) aufweist und der Federring dafür ausgelegt ist, mit einer in der Hydraulikventilkörperbohrung (91) ausgebildeten Komplementärnut (102) zusammenzuwirken, um den Sensor in der Ventilkörperbohrung zu halten.

18. Drucksensor nach Anspruch 3,
wobei der Drucksensor in einer Antriebsschlupfregelung enthalten ist.

19. Drucksensor nach Anspruch 3,
wobei der Drucksensor in einem Fahrzeugstabilitätssystem enthalten ist.

20. Verfahren zum Installieren des Drucksensors nach Anspruch 1 in einen Hydraulikventilkörper, das die Schritte umfasst:
(a) Bereitstellen eines Drucksensors (10; 55; 70; 90) mit einem zylindrischen Basisabschnitt (11; 71; 105), der einen Federring (46; 101) in einer ersten darin ausgebildeten Umfangsnut (14; 100) trägt, und einem Ring aus elastischem Material (45; 95, 96), der in einer zweiten darin ausgebildeten Umfangsnut (15; 97, 98) gehalten wird,
(b) teilweises Einführen des Drucksensors (10; 55; 70; 90) in eine Bohrung (41; 58; 91) in einem Ventilkörper (40; 60; 92) für ein hydraulisches Steuersystem bis der Ring aus elastischem Material (45; 95, 96) mit der Wand der Ventilkörperbohrung (41; 58; 91) eine Abdichtung bildet,
(c) Verbinden des Drucksensors (10; 55; 70; 90) mit Drucküberwachungseinrichtungen,
(d) Unterdrucksetzen der Ventilkörperbohrung (41; 58; 91),
(e) Beobachten der Überwachungseinrichtungen, um den Betrieb des Drucksensors zu bestätigen, und
(f) vollständiges Einführen des Drucksensors (10; 55; 70; 90) in die Ventilkörperbohrung bei Erhalt von Anzeigen, die angeben, dass der Drucksensor zufriedenstellend arbeitet und der Federring (46; 101) mit einer in der Wand der Ventilkörperbohrung ausgebildeten Umfangsnut (43; 102) in Eingriff steht und damit zusammenwirkt, um den Sensor in der Ventilkörperbohrung zu halten.

21. Verfahren nach Anspruch 20, das ferner die Schritte umfasst:
(g) Entfernen der Überwachungseinrichtungen, und
(h) Befestigen eines Gehäuses am Ventilkörper, wobei das Gehäuse den Drucksensor umschließt und mit dem Ventilkörper eine hermetische Abdichtung bildet.

## Revendications

1. Capteur de pression (10 ; 55 ; 70 ; 90) destiné à un système de commande hydraulique comprenant :
une partie de base cylindrique (11 ; 71 ; 105) disposant d'une rainure circonférentielle (15 ; 97, 98) formée dans celle-ci, ladite partie de base (11 ; 71 ; 105) étant adaptée pour être insérée dans un alésage (41 ; 58 ; 91) formé dans un corps (40 ; 60 ; 92) de vanne hydraulique destiné au système de commande hydraulique ;
un anneau en matériau élastique (45 ; 95, 96) disposé dans ladite rainure circonférentielle (15 ; 97, 98), ledit matériau élastique adapté afin de former un joint entre ladite partie de base (11 ; 71 ; 105) et une paroi dudit alésage (41 ; 58 ; 91) formé dans ledit corps de vanne hydraulique ; et
un dispositif (21 ; 72) de détection de la pression monté sur ladite partie de base (11 ; 71 ; 105) ; et
un connecteur (25 ; 73) électrique axial monté sur ladite partie de base (11 ; 71 ; 105),
**caractérisé en ce que** ledit connecteur (25 ; 73) électrique comprend une pluralité de connecteurs (26, 27, 28 ; 74, 77, 79) électriques concentriques ayant des formes courbées et différentes longueurs axiales.

2. Capteur selon la revendication 1, dans lequel ladite rainure circonférentielle (15 ; 97, 98) est une première rainure et ladite partie de base (11 ; 71 ; 105) dispose d'une deuxième rainure circonférentielle (14 ; 100) formée dans celle-ci, ladite deuxième rainure circonférentielle (14 ; 100) ayant un anneau élastique (46 ; 101) disposé dans celle-ci, ledit anneau élastique (46 ; 101) étant adapté pour coopérer avec une rainure complémentaire (43 ; 102) formée dans ledit alésage (41 ; 58 ; 91) du corps de vanne hydraulique afin de maintenir le capteur dans ledit alésage du corps de vanne.

3. Capteur selon la revendication 1, dans lequel ladite partie de base (11 ; 71; 105) dispose d'un alésage axial (12) formé dans celle-ci qui se termine par un diaphragme (13), ledit diaphragme (13) transportant ledit dispositif (21 ; 72) de détection de la pression et ledit alésage (12) axial étant adapté pour recevoir le fluide hydraulique sous pression.

4. Capteur selon la revendication 3, dans lequel le capteur (10 ; 55 ; 70 ; 90) est monté dans un corps (40 ; 60 ; 92) de vanne de système de commande hydraulique de manière adjacente à une pluralité d'électrovannes et en outre dans lequel le capteur est enfermé par un boîtier amovible, ledit boîtier formant un joint hermétique avec ledit corps de vanne (40 ; 60 ; 92), ledit boîtier transportant également des bobines d'électroaimant destinées aux électrovannes.

5. Capteur selon la revendication 4, dans lequel ledit connecteur électrique (25 ; 73) est un connecteur mâle et dans lequel ledit boîtier transporte un connecteur femelle qui coopère avec ledit connecteur mâle afin de former une connexion électrique destinée audit dispositif de détection de la pression.

6. Capteur selon la revendication 3, comprenant en outre un raccord cylindrique (70) disposé dans ledit alésage axial (12) formé dans ladite partie de base (11 ; 71 ; 105) du capteur, ledit raccord (70) disposant d'un alésage axial formé à travers celui-ci.

7. Capteur selon la revendication 6, dans lequel ladite partie de base (11 ; 71 ; 105) a une forme extérieure à épaulements et en outre dans lequel ledit alésage (12) du corps de vanne est également à épaulements avec ledit épaulement d'alésage du corps de vanne coopérant avec ledit échelon de partie de base (11 ; 71 ; 105) afin de limiter la distance d'insertion du capteur dans ledit alésage du corps de vanne.

8. Capteur selon la revendication 3, comprenant en outre un circuit (23) de traitement de signal transporté par ladite partie de base (11 ; 71 ; 105) du capteur.

9. Capteur selon la revendication 8, dans lequel ledit circuit (23) de traitement de signal effectue des tests de diagnostic sur ledit dispositif (21 ; 72) de détection de la pression et, lors de la détection d'un capteur de pression non-actionnable, génère un signal d'erreur.

10. Capteur selon la revendication 9, dans lequel ledit test de diagnostic est effectué lors du démarrage initial du capteur.

11. Capteur selon la revendication 9, dans lequel ledit circuit (23) de traitement de signal est connecté à un microprocesseur inclus dans un système de freinage antiblocage, ledit circuit (23) de traitement de signal étant sensible à un signal provenant dudit microprocesseur destiné à transmettre des données de pression audit microprocesseur.

12. Capteur selon la revendication 11, comprenant en outre un capteur de température, ledit circuit de traitement de signal étant actionnable afin de transmettre des données de température audit microprocesseur.

13. Capteur selon la revendication 12, dans lequel lesdites données sont transmises avec une onde modulée par impulsion selon une fréquence qui est fonction des données de température et un cycle de fonctionnement qui est fonction des données de pression.

14. Capteur selon la revendication 12, dans lequel lesdites données sont transmises avec une onde modulée par impulsion selon une fréquence qui est fonction des données de pression et un cycle de fonctionnement qui est fonction des données de température.

15. Capteur selon la revendication 1, dans lequel ladite partie de base (11 ; 71 ; 105) du capteur dispose d'une deuxième rainure circonférentielle (14 ; 100) formée dans celle-ci, ladite deuxième rainure circonférentielle (14 ; 100) disposant d'un deuxième anneau (95, 96) en matériau élastique disposé dans celle-ci, ledit matériau élastique étant également adapté pour former un joint entre ladite partie de base (11 ; 71 ; 105) et ledit alésage (41 ; 58 ; 91) du corps de vanne, et en outre dans lequel ledit corps de vanne (100) dispose d'un passage (93) d'alimentation en fluide formé dans celui-ci qui communique avec ledit alésage (91) du corps de vanne entre lesdits premier et deuxième anneaux élastiques (95, 96), ledit passage (93) d'alimentation en fluide étant adapté pour fournir du fluide hydraulique sous pression audit alésage (91) du corps de vanne grâce à quoi les pressions axiales exercées sur le capteur sont équilibrées.

16. Capteur selon la revendication 15, dans lequel ladite partie de base (11 ; 71 ; 105) du capteur comprend en outre un orifice de détection de la pression formé dans celle-ci entre lesdits anneaux en matériau élastique.

17. Capteur selon la revendication 16, comprenant en outre une troisième rainure circonférentielle (100) formée dans ladite partie de base (105) du capteur, ladite troisième rainure circonférentielle (100) disposant d'un anneau élastique (101) disposé dans celle-ci, ledit anneau élastique étant adapté pour coopérer avec une rainure complémentaire (102) formée dans l'alésage (91) du corps de vanne hydraulique afin de maintenir le capteur dans ledit alésage du corps de vanne.

18. Capteur de pression selon la revendication 3, dans lequel le capteur de pression est inclus dans le système d'antipatinage à l'accélération.

19. Capteur de pression selon la revendication 3, dans lequel le capteur de pression est inclus dans un système de stabilité du véhicule.

20. Procédé destiné à installer le capteur de pression de la revendication 1 dans un corps de vanne hydraulique comprenant les étapes consistant à :
(a) prévoir un capteur de pression (10 ; 55 ; 70 ; 90) disposant d'une partie de base (11 ; 71 ; 105) cylindrique qui transporte un anneau élastique (46 ; 101) dans une première rainure circonférentielle (14 ; 100) formée dans celle-ci et un anneau en matériau élastique (45 ; 95, 96) transporté dans une deuxième rainure circonférentielle (15 ; 97, 98) formée dans celle-ci ;
(b) insérer le capteur de pression (10 ; 55 ; 70 ; 90) partiellement à l'intérieur d'un alésage (41 ; 58 ; 91) dans un corps de vanne (40 ; 60 ; 92) destiné à un système de commande hydraulique jusqu'à ce que l'anneau en matériau élastique (45 ; 95, 96) forme un joint avec la paroi de l'alésage (41 ; 58 ; 91) du corps de vanne ;
(c) connecter le capteur de pression (10 ; 55 ; 70 ; 90) à l'équipement de surveillance de la pression ;
(d) mettre sous pression l'alésage (41 ; 58 ; 91) du corps de vanne ;
(e) observer l'équipement de surveillance afin de confirmer l'opération du capteur de pression ; et
(f) insérer le capteur de pression (10 ; 55 ; 70 ; 90) entièrement dans l'alésage du corps de vanne lors de l'obtention des mesures afin d'indiquer le bon fonctionnement du capteur de pression, l'anneau élastique (46 ; 101) s'engageant dans une rainure circonférentielle (43 ; 102) formée dans la paroi de l'alésage du corps de vanne et coopérant avec celle-ci afin de maintenir le capteur à l'intérieur de l'alésage du corps de vanne.

21. Procédé selon la revendication 20, comprenant en outre les étapes consistant à:
(g) retirer l'équipement de surveillance ; et
(h) fixer un boîtier au corps de vanne, le boîtier enfermant le capteur de pression et formant un joint hermétique avec le corps de vanne.
